# EUROPÄISCHE PATENTSCHRIFT

(11) **EP 3 155 885 B1**
(45) Veröffentlichungstag und Bekanntmachung des Hinweises auf die Patenterteilung: **02.12.2020**
(21) Anmeldenummer: 16002180.4
(22) Anmeldetag: 10.10.2016
(51) Int. Cl.: A01B 23/02, A01B 23/04, A01B 35/22, A01B 39/22, A01B 51/04

(54) **MODULARES LANDWIRTSCHAFTLICHES GERÄT ZUR BODENBEARBEITUNG**
MODULAR AGRICULTURAL DEVICE FOR SOIL CULTIVATION
APPAREIL AGRICOLE MODULAIRE POUR LA CULTURE DU SOL

(30) Priorität: 13.10.2015 AT 6652015
(43) Veröffentlichungstag der Anmeldung: 19.04.2017
(73) Patentinhaber: DicksonKerner GmbH, 89344 Aislingen (DE)
(72) Erfinder: DICK, Bernhard, 4753 Taiskirchen (AT)
(74) Vertreter: Kovac, Werner

(56) Entgegenhaltungen:
- DE-A1-102009 043 997
- US-A- 2 617 346
- US-A- 3 016 958
- US-A- 4 286 892
- US-A1- 2007 246 235

## Beschreibung

Die Erfindung betrifft ein Landwirtschaftliches Gerät zur Bodenbearbeitung, bestehend im Wesentlichen aus mindestens zwei Längsträgern, mindestens zwei Querträgern und an diesen befestigten Bodenbearbeitungswerkzeugen (Zinken, Scharen oder dergleichen) zur konservierenden Bodenbearbeitung. Nicht betroffen sind Geräte zur wendenden Bodenbearbeitung, das sind Pflüge.

In der Patentschrift US 5,207,279 ist ein gattungsgemäßes Gerät beschrieben, dessen Rahmen aus Längsträgern und mit ihnen an Knotenpunkten verbundenen Querträgern besteht. Im Bereich dieser Knotenpunkte können keine Bodenbearbeitungswerkzeuge befestigt werden, da deren Befestigungselemente mit einem Längsträger oder Verbindungselementen von Längs- und Querträger kollidieren würden. Deshalb müssen diese Geräte für verschiedene Bodeneigenschaften und unterschiedliche Strichabstände (das sind die Abstände zwischen gleichartigen Werkzeugen auf dem jeweiligen Querträger) mit unterschiedlichen Rahmengeometrien hergestellt werden. Weil der Strichabstand im Nachhinein nicht beliebig geändert werden kann, gibt es eine Vielzahl an unterschiedlichen Geräten die kaum individualisierbar sind, wo doch eine für die jeweilige Bodenbeschaffenheit individuelle Einstellung von Strichabstand, Bearbeitungstiefe und Bodenbearbeitungswerkzeug nötig wäre.

Das Patent US 2,617,346 beschreibt ein weiteres gattungsgemäßes Gerät, dessen Rahmen aus offenen - daher torsionsweichen - Profilen besteht. Die einzelnen Bodenbearbeitungswerkzeuge sind wohl an verschiedenen Stellen der Querträger anbringbar, nicht aber wo die Querträger mit den Längsträgern verbunden sind. Sind sie aber zu weit von diesen Stellen entfernt, wirkt sich die geringe Torsionssteifigkeit nachteilig aus. Außerdem ist der Rahmen plump und die Befestigung der einzelnen Bodenbearbeitungswerkzeuge umständlich.
Bei der Konstruktion gemäß der Schrift GB 2 465 818 sind die Querträger über Blechlaschen als Abstandsstücke mit den Längsträgern verbunden. Das, um die Zone, in der Bodenbearbeitungswerkzeuge nicht anbringbar sind, möglichst eng zu halten. Jedoch ist diese Konstruktion weich und sperrig und die Befestigung der Werkzeuge ist auch bei dieser Konstruktion umständlich.

Die Offenlegungsschrift DE 10 2009 043 997A1 betrifft ein Rahmengestell, das aus Rechteckrohren mit abgeschrägten Kanten besteht, welche in einer gemeinsamen Ebene liegen und an ihren Kreuzungen über ihrer ganzen Höhe miteinander verschweißt sind. Dadurch sind Bodenbearbeitungswerkzeuge an den Kreuzungen nicht anbringbar.

Der Erfindung liegt demnach die Aufgabe zugrunde, auch unterschiedliche Bodenbearbeitungswerkzeuge, in ein und demselben Trägerrahmen in jeder beliebigen Anordnung und Position über die gesamte Gerätebreite befestigen zu können. Dabei soll die Herstellung einfach und der Produktnutzen möglichst groß sein.
Das wird erfindungsgemäß durch die kennzeichnenden Merkmale des Anspruchs 1 erreicht. Die Ausführung der Längsträger als Profilstäbe gibt dem Rahmen des Gerätes hohe Steifigkeit, bei Verwendung geschlossener Hohlprofile insbesondere Torsionssteifigkeit bei minimalem Gewicht. Dadurch, dass die Querträger nur in ihrer oberen Region mit den Längsträgern verbunden sind, und in ihrem unteren Bereich zumindest eine zur Vertikalen nach innen geneigte sich über deren ganze Länge erstreckende Fläche bilden, können die Bodenbearbeitungswerkzeuge an jeder beliebigen Stelle eines Querträgers - ohne Behinderung durch einen Längsträger - angebracht und nach Lösen der Befestigung sogar verschoben werden. Die von unten aus nach innen geneigte Wand dient der Befestigung der Bodenbearbeitungswerkzeuge am Querträger, ohne diesen zu umschlingen. Dadurch ist auch eine Befestigung direkt unter einem Längsträger möglich. In einer bevorzugten Ausführung bildet die obere Region der Querträger mit den Längsträgern eine Verschneidung, entlang derer die einander windschief kreuzenden Querträger und Längsträger miteinander verbunden, vorzugsweise verschweißt sind. Die Schweißnaht verläuft dreidimensional und endet an ihrem Anfang. So wird eine steife und sogar versteifende Verbindung mit einer einzigen Schweißnaht hergestellt, ohne Absetzen des Schweißbrenners. Das vereinfacht auch den Einsatz eines Schweißroboters. Die untere Region der Querträger bleibt so auch an Kreuzungspunkten für die Befestigung der Bodenbearbeitungswerkzeuge frei zugänglich.

Für die Befestigung der Bodenbearbeitungswerkzeuge an den Querträgern mit Hilfe der zur Vertikalen einwärts geneigten Flächen sind verschiedene Lösungen denkbar. Zwei besonders vorteilhafte Ausführungsformen sind Gegenstand der Unteransprüche 3 und 5.

In einer ersten Ausführungsform haben die Querträger in ihrem unteren Bereich beiderseits (in Arbeitsrichtung vorne und hinten)über einer horizontalen Bodenwand eine sich über dessen ganze Länge erstreckende Nut, deren untere Begrenzung von dem zur Vertikalen einwärts geneigten Wandteil gebildet ist; und haben die Bodenbearbeitungswerkzeuge jeweils einen Klemmfuß, der zusammen mit einem Verschlussstück die untere Region des Querträgers beiderseits umgreift und mit vorspringenden Leisten in die Nuten eingreift. Die geneigten Wandteile und die Leisten ergeben dank dem geneigten Wandteil eine auch nach Verschleiß feste Klemmverbindung. Die vorzugsweise um einen Winkel von 20 bis 45 Grad geneigten Wandteile und die Nuten ergeben eine optimale Eintragung der Arbeitskräfte, insbesondere eines Drehmomentes, in die Querträger.

In einer besonders zweckmäßigen Weiterbildung liegt der Klemmfuß an der Unterseite des Querträgers an und ist das Verschlussstück mit dem Klemmfuß verschraubt. Dadurch, dass die Schraubenbolzen von der Seite des Verschlussstückes horizontal in Gewindebohrungen im Klemmfuß eindringen, ist deren Kopf zum Lösen der Verbindung gut zugänglich, und es kann keine Mutter verloren gehen.

In einer zweiten Ausführungsform besteht der Querträger aus über ihre ganze Länge miteinander verschweißten hohlen Rechteckprofilstäben: aus einem ersten hohen und in seiner unteren Region aus beiderseits je einem kleinen zweiten Profilstab. Die Bodenbearbeitungswerkzeuge haben jeweils einen Klemmfuß, der zusammen mit einem Verschlussstück die untere Region des Querträgers beiderseits umgreift und mit vorspringenden Leisten beiderseits an den gegen die Vertikale um 90 Grad einwärts geneigten Wandteile der zweiten Profile angreift. Diese Variante gestattet die Verwendung handelsüblicher genormter und als Massenware billiger Profile.

Die Aufgabe der Erfindung wird alternativ durch die Merkmale des Anspruchs 6 gelöst. Dabei sind für die Aufnahme der Bodenbearbeitungswerkzeuge jeweils zwei Querträger in geringem Abstand vorgesehen, die an den einander zugekehrten Seiten jeweils eine Nut haben, wobei Klemmfuß und Verschlussstück mit einer Nase in die Nut des einen und des anderen Querträgers eingreift. Das Verschlussstück bildet einen zweiarmigen Hebel, dessen oberer Arm in eine Nut eingreift und dessen unterer Arm mittels horizontaler Schraubbolzen zum Klemmfuß hin verspannbar ist. Diese Konstruktion hat den Vorteil, dass die Querträger kaum auf Torsion beansprucht sind.

In Weiterbildung und unter Ausnutzung der von den Hauptmerkmalen der Erfindung eröffneten Möglichkeiten hat das erfindungsgemäße Gerät eine Anzahl hintereinander angeordneter Querträger mit identischen Querschnitten und haben verschiedene Bodenbearbeitungswerkzeuge identische Klemmfüße, sodass verschiedene Bodenbearbeitungswerkzeuge wahlweise und in verschiedenen Konstellationen anordenbar sind. So wird ein modulares System geschaffen.

Im folgenden wird die Erfindung anhand von Abbildungen beschrieben und erläutert. Es stellen dar:
- Fig. 1:: den erfindungsgemäßen Geräteaufbau in Draufsicht,
- Fig. 2:: den Geräteaufbau der Fig.1 in Seitenansicht,
- Fig. 3:: Detail III in Fig.1 in größerem Maßstab,
- Fig. 4:: Detail IV in Fig.2 in einer ersten Ausführungsform,
- Fig. 5:: Wie Fig. 4, in einer zweiten Ausführungsform,
- Fig. 6:: Wie Fig. 4, in einer dritten Ausführungsform,
- Fig. 7:: Detail IV in Fig.2, explodiert und mit verschiedenen Bodenbearbeitungswerkzeugen.
- Fig. 8:: Ein abgewandeltes Beispiel eines erfindungsgemäßen Geräteaufbaus.

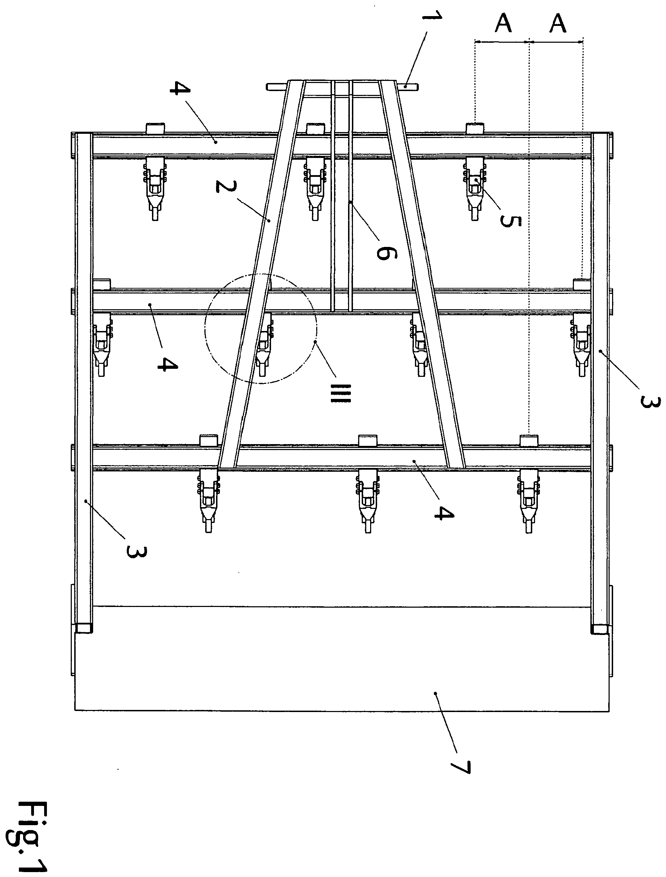

In **Fig. 1** ist ein Anbau für die Verbindung mit einer nicht dargestellten Zugmaschine mit 1 bezeichnet. Schräge Längsträger 2 und Zugstreben 6 stellen die Verbindung zu dem Rahmen des Gerätes her. Dieser besteht hauptsächlich aus jeweils einer Anzahl von Längsträgern 3 und Querträgern 4. An letzteren sind Bodenbearbeitungswerkzeuge 5 befestigt. Deren Anordnung ist wählbar, womit gewünschte Strichabstände A einstellbar sind. An den hinteren Enden der als Hohlprofile ausgebildeten Längsträger 3 ist ein Nachlaufwerkzeug 7 angebracht. Es kann eine Walze zur Verfestigung des Bodens und zur Einhaltung der Arbeitstiefe sein.

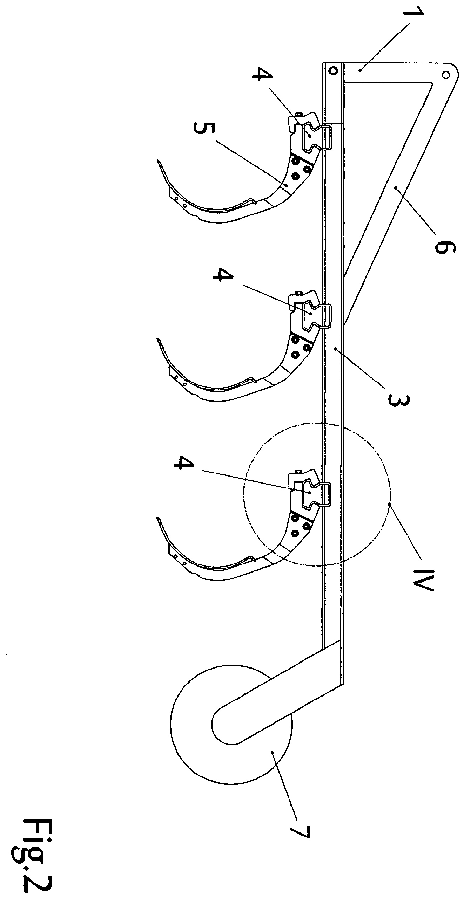

Anhand der **Fig. 2** ist zu erkennen, dass die Querträger 4 zumindest teilweise unter den Längsträgern 2,3 verlaufen und dass die Bodenbearbeitungswerkzeuge 5, hier beispielsweise starre Zinken, an den Querträgern befestigt sind. Auf die Verbindung der Träger 3,4 und die Befestigung der Werkzeuge 5 wird im Folgenden eingegangen.

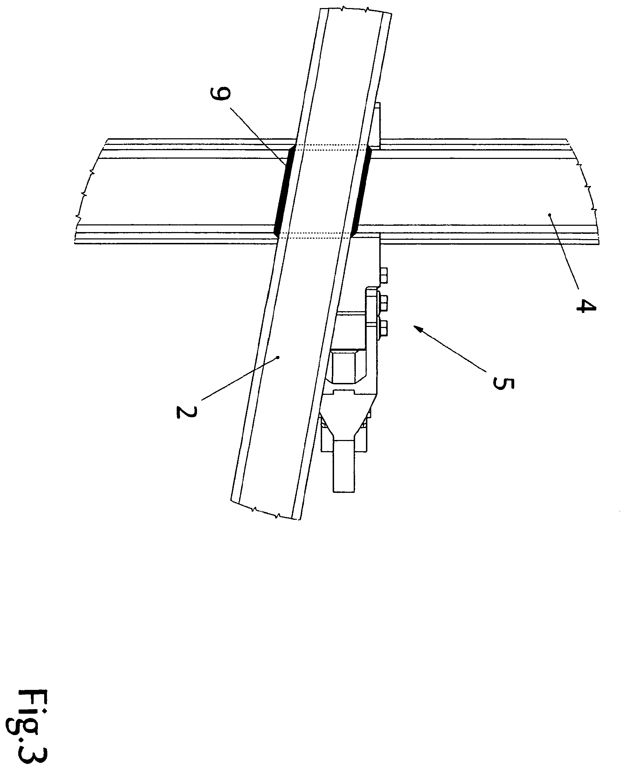

**Fig.3** zeigt die Verbindung eines hohlen Längsträgers 2 mit einem teilweise darunter angeordneten hohlen Querträger 4 mittels einer geschlossenen Schweißnaht 9, deren in der Draufsicht unsichtbarer Teil mit einer doppelten strichlierten Linie angedeutet ist. Dank dieser Verbindung und des Querschnittes des Längsträgers kann das Bodenbearbeitungswerkzeug 5 wie dargestellt auch direkt unter der Verbindung der Träger befestigt werden.

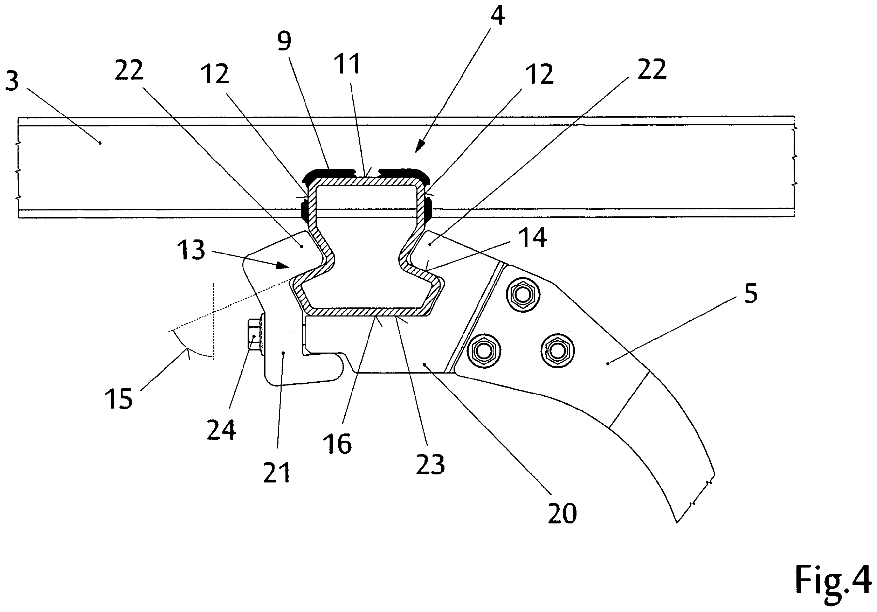

In der in **Fig. 4** dargestellten Ausführungsform hat der Querträger 4 ein auf möglichst hohe Torsionssteifigkeit ausgelegtes Hohlprofil. Obere (11) und seitliche (12) Wandteile 11,12 der oberen Region des Profils sind hier rechteckig und mit dem Längsträger verschweißt (Schweißnaht 9). Sie könnten auch mit ihm verschraubt sein. Die seitlichen Wandteile 12 gehen nach unten hin beiderseits in eine Nut 13 über, deren wesentlicher Teil ein von unten aus gegen die Vertikale einwärts geneigter Wandteil 14 ist. Der Neigungswinkel 15 beträgt hier ungefähr 60 Grad. Diese Wandteile 14 und die Bodenwand 16 bilden die untere Region und sind für die Aufnahme und Eintragung der Arbeitskräfte in die Querträger 4 wesentlich.

Zur verschiebbaren Führung und Befestigung an den Querträgern 4 haben die Bodenbearbeitungswerkzeuge 5 einen Klemmfuß 20, der zusammen mit einem Verschlussstück 21 die untere Region des Querträgers 4 beiderseits umgreift und mit vorspringenden Leisten 22 in die Nuten 13 eingreift. Die am unteren Wandteil 16 anliegende Sohle 23 des Klemmfußes 20 und die in die Nuten 13 eingreifende Leisten 22 des Klemmfußes 20 und des Verschlussstücks 21 bilden dank der Neigung des Wandteils 14 eine feste formschlüssige und verschleißunabhängige Verbindung, wenn die beiden Teile 20,21 mittels Gewindebolzen 24 gegeneinander verspannt sind.

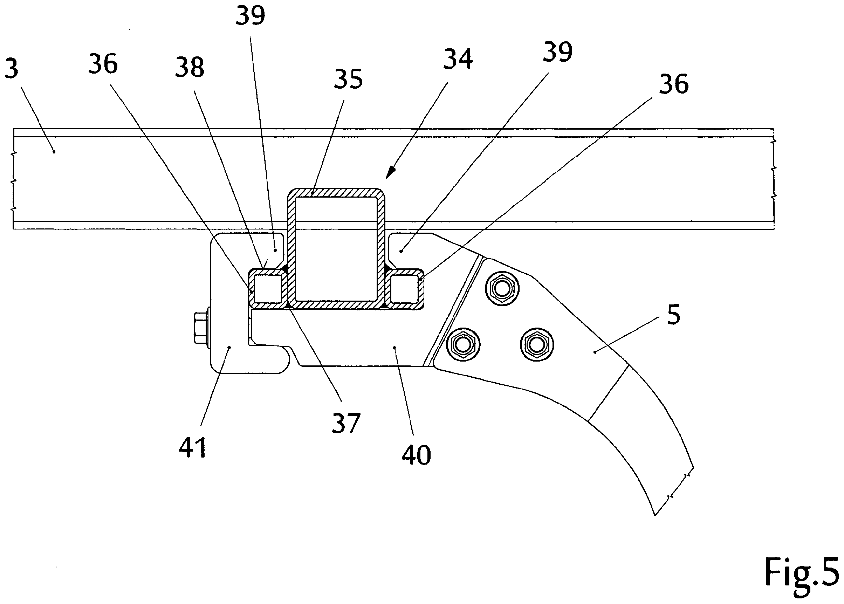

In der Ausführungsform der **Fig. 5** besteht der Querträger 34 aus handelsüblichen Hohlprofilen, im Querschnitt aus einem Rechteckprofil 35 mit horizontaler Schmalseite und in der unteren Region beiderseits je einem kleineren quadratischem Profil 36. Diese sind über ihre ganze Länge miteinander verschweißt, Schweißnähte 37. Klemmfuß 40 und Verschlussstück 41 unterscheiden sich von denen der ersten Ausführungsform (20, 21) nur dadurch, dass die Leisten 39 so ausgebildet sind, dass sie an den hier um einen rechten Winkel zur Vertikalen geneigten Wandteilen 38 formschlüssig anliegen.

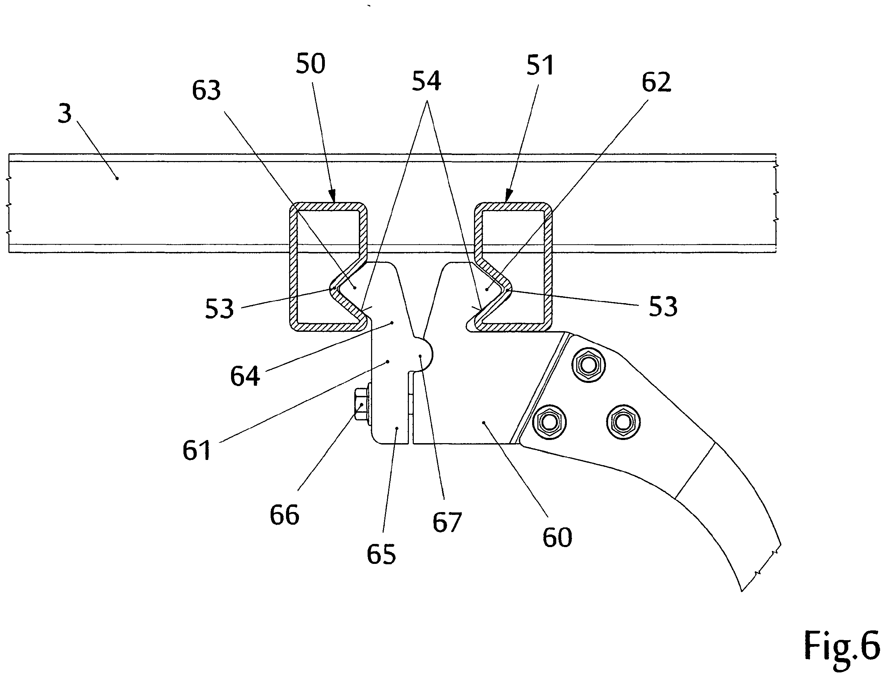

In der Ausführungsform der **Fig. 6** sind anstelle eines Querträgers jeweils zwei Querträger 50,51 in geringem Abstand angeordnet. Ihr Querschnitt ist ein Rechteck mit in seiner unteren Region jeweils nur einer V-förmigen Nut 53 an der dem jeweils anderen Querträger zugewandten Seite. Der Wandteil 54 ist hier um etwa 45 Grad zur Vertikalen geneigt. Leisten 62,63 eines Klemmfußes 60 und eines Verschlussstücks 61 werden zur Befestigung des Werkzeuges 5 zwischen die beiden Querträger 50,51 eingeführt und zum Eingriff in die Nuten 53 auseinander bewegt. Dazu bildet das Verschlussstück 61 einen zweiarmigen Hebel, dessen oberer Arm 64 in die Leiste 63 ausläuft und dessen unterer Arm 65 mittels eines horizontalen Gewindebolzens 66 zum Klemmfuß 60 gezogen wird. Als Schwenklager dient ein in eine Mulde eingreifender tonnenförmiger Wulst 67.

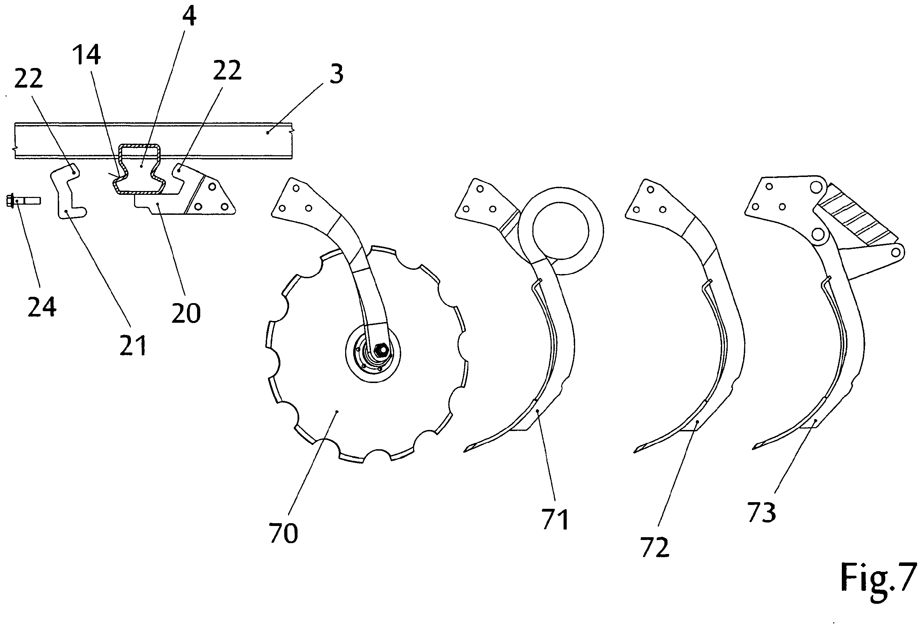

Anhand der **Fig. 7** ist die Vorgangsweise bei der Montage eines Bodenbearbeitungswerkzeugs 5 besser erkennbar. Bei identischer Ausbildung von Klemmfuß 20 und Verschlussstück 21 können verschiedene Werkzeuge in beliebiger Anordnung montiert werden, so beispielsweise Scheibenscharen 70, Federzinken 71, Zinken mit Scharen 72 oder steingesicherte Zinken 73. Für die Positionierung eines Werkzeuges auf einem Querträger muss nur die Klemmverbindung gelockert werden. Die Nuten wirken dann als Schiebeführung.

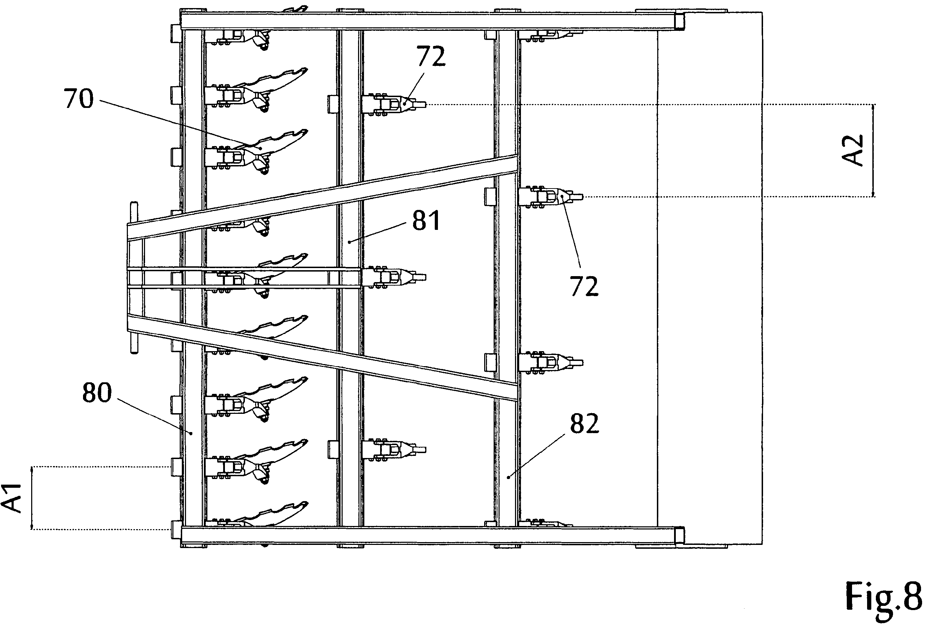

Ein Beispiel eines dank der Erfindung möglichen Geräteaufbaus ist in **Fig. 8** zu sehen. Auf dem vordersten Querträger 80 sind Scheibenscharen 70 mit einem Strichabstand A1 montiert, auf Querträgern 81, 82 sind abwechselnd, einmal am vorderen, dann am hinteren, Zinken 72 so angeordnet, dass sich ein anderer Strichabstand A2 und dadurch eine geringere Biegebelastung der Querträger 81,82 ergibt.

Insgesamt können so, nur durch Austauschen der Bodenbearbeitungswerkzeuge, unterschiedlichste Bodenbearbeitungsgeräte zusammengestellt werden. Das Austauschen ist einfach und die Klemmvorrichtung - insbesondere die Gewindebolzen - so gut zugänglich, dass es schnell und ohne Abkoppeln des Gerätes vom Zugfahrzeug erfolgen kann. So kann der Nutzer das Gerät dem jeweiligen Bodengefüge anpassen und Einstellungen vornehmen, beispielsweise je nach Bodenbeschaffenheit und Bodenbearbeitungsmethode den passende Strichabstand einstellen. Aber auch der Hersteller des Gerätes profitiert dank dem modularen Aufbau des Gerätes von der einfachen und rationellen Fertigung.

## Patentansprüche

1. Landwirtschaftliches Gerät zur Bodenbearbeitung, bestehend aus mindestens zwei Längsträgern (3), mindestens zwei Querträgern (4; 34) und an diesen befestigten Bodenbearbeitungswerkzeugen (5; 70-73), wobei die Querträger (4; 34) Profilstäbe sind, **dadurch gekennzeichnet, dass** die Querträger (4; 34) in ihrem unteren Bereich zumindest einen von unten aus zur Vertikalen nach innen geneigten und sich über deren ganze Länge erstreckenden Wandteil (14; 38) bilden, an dem Befestigungsmittel (20,21; 40, 41) der Bodenbearbeitungswerkzeuge (5; 70-73) angreifen, wobei nur die obere Region der Querträger (4; 34) mit den Längsträgern (3) verbunden ist.

2. Landwirtschaftliches Gerät nach Anspruch 1, wobei die Längsträger(3)und die Querträger (4;34) geschlossene Hohlprofile sind **dadurch gekennzeichnet, dass** die Wandteile der Querträger (4;34) in ihrer oberen Region mit den Wänden der Längsträger (3) eine Verschneidung bilden, entlang derer die obere Region der Querträger mit dem jeweiligen Längsträger verbunden ist.

3. Landwirtschaftliches Gerät nach Anspruch 1, **dadurch gekennzeichnet, dass**
a) jeweils ein Querträger (4) in seinem unteren Bereich beiderseits über einer horizontalen Bodenwand (16) eine sich über dessen ganze Länge erstreckende Nut (13) aufweist, deren untere Begrenzung von dem zur Vertikalen Z nach innen geneigten Wandteil (14) gebildet ist; und dass
b) die Bodenbearbeitungswerkzeuge (5; 70-73) jeweils einen Klemmfuß (20) haben, der zusammen mit einem Verschlussstück (21) die untere Region des Querträgers (4) beiderseits umgreift und mit vorspringenden Leisten (22) in die Nuten (13) eingreift.

4. Landwirtschaftliches Gerät nach Anspruch 3, **dadurch gekennzeichnet, dass** der Klemmfuß (20) an der Bodenwand (16) des Querträgers anliegt und mit einer Leiste (22) in die Nut(13) eingreift, wobei die geneigte Fläche der Nut um einen Winkel von weniger als 90 Grad, vorzugsweise 20 bis 45 Grad, zur Vertikalen nach innen geneigt ist, und dass das Verschlussstück (21) ebenfalls in eine Nut (13) eingreift und mit dem Klemmfuß (20) verschraubt ist, wobei Schraubenbolzen (24)von der Seite des Verschlussstückes (21) horizontal in Gewindebohrungen im Klemmfuß (20) führen.

5. Landwirtschaftliches Gerät nach Anspruch 1, **dadurch gekennzeichnet, dass**
a) der Querträger (34) aus einem ersten hohlen Rechteckprofilstab (35) und in seiner unteren Region beiderseits je einem kleineren zweiten Rechteckprofilstab (36) besteht, welche miteinander über ihre ganze Länge mittels Schweißnähten (37)verbunden sind, und
b) dass die Bodenbearbeitungswerkzeuge (5; 70-73) jeweils einen Klemmfuß (40) haben, der zusammen mit einem Verschlussstück (41) die untere Region des Querträgers (34) beiderseits umgreift und mit vorspringenden Leisten (39) beiderseits an den gegen die Vertikale um einen rechten Winkel einwärts geneigten Deckwänden (38) der zweiten Profile (36) angreift.

6. Landwirtschaftliches Gerät zur Bodenbearbeitung, bestehend aus mindestens zwei Längsträgern (3), mindestens zwei Querträgern (4; 34; 50,51) und an diesen befestigten Bodenbearbeitungswerkzeügen (5; 70-73), wobei die Querträger (4; 34; 50,51) Profilstäbe sind, die in ihrem unteren Bereich zumindest einen von unten aus zur Vertikalen geneigten und sich über deren ganze Länge erstreckenden Wandteil (54) bilden, an dem Befestigungsmittel (60,61)der Bodenbearbeitungswerkzeuge (70-73) angreifen, wobei nur die obere Region der Querträger (50,51) mit den Längsträgern (3) verbunden ist, **dadurch gekennzeichnet, dass**
a) für die Aufnahme der Bodenbearbeitungswerkzeuge (70-73) jeweils zwei hohle Querträger (50,51) vorgesehen sind, die an den einander zugekehrten Seiten jeweils eine Nut (53) haben, wobei der Klemmfuß (60) mit seiner Nase (62)in die Nut (53) des einen Querträgers (50) und das Verschlussstück (61) mit seiner Nase (63) in die Nut (53) des anderen Querträgers (51) eingreift, und dass
b) das Verschlussstück (61) einen zweiarmigen Hebel bildet, dessen oberer Arm (64) in eine Nut (63) eingreift und dessen unterer Arm (65) mittels horizontaler Schraubbolzen (66)zum Klemmfuß (60) hin verspannbar ist.

7. Landwirtschaftliches Gerät nach Anspruch 1 oder 6 mit mehreren hintereinander angeordneten Querträgern (4; 80-82), **dadurch gekennzeichnet, dass** sie identische Querschnitte haben und dass verschiedene Bodenbearbeitungswerkzeuge (5; 70-73) identische Klemmfüße (20,21; 40, 41; 60, 61) haben, sodass verschiedene Bodenbearbeitungswerkzeuge (5; 70-73) wahlweise und in verschiedenen Anordnung anbringbar sind.

## Claims

1. Agricultural implement for soil treatment, comprising at least two longitudinal beams (3), at least two transverse beams (4; 34)and soil treatment tools (5; 70-73) attached to the latter, the transverse beams (4; 34) being profiled bars, **wherein** the transverse beams (4; 34) comprise in their lower region at least one side portion (14;38) inclined upwards and inwards with regard to a vertical line, extending over their entire length, support members (20,21; 40,41) of the soil treatment tools (5; 70-73) being attached to the side portion (14;38), only the upper region of the transverse beams (4; 34) being fastened to the longitudinal beams (3).

2. Agricultural implement according to claim 1, wherein the longitudinal beams (3) and the transverse beams (4; 34) are closed hollow profiles, **caracterized** in that the side portions of the transverse beams (4; 34) intersect the walls of the longitudinal beams (3) in their upper region, the latter being fastened to the respective longitudinal beams (3)along this intersection.

3. Agricultural implement according to claim 1, **caracterized** in that
a) Each transverse beam (4) has a horizontal base wall (16) and in its lower region on each side a groove(13) extending over its entire length, the groove's lower wall being constituted by the side portion (14) inclined upwards and inwards with regard to a vertical line, and that
b) each of the soil treatment tools (5; 70-73) comprises a clamping foot (20) which, together with a closing piece (21), embraces the lower region of the transverse beam (4) on both sides and with protruding bosses (22) engages the grooves (13).

4. Agricultural implement according to claim 3, **caracterized** in that the clamping foot (20) rests against the base wall (16) and engages the groove (13) with bosses (22), the side portion (14) of the groove (13) being inclined towards the inside by an angle of less than 90 degrees, preferrably between 20 and 45 degrees towards inside, with regard to a vertical line, and that the closing piece (21)likewise engages a groove (13) and is fastened to the clamping foot (20), screw bolts (24) reaching from the side of the closing piece (21) horizontally into threaded bores in the clamping foot (20).

5. Agricultural implement according to claim 1, **caracterized** in that
a) the transverse beam (34)consists of a first hollow rectangular profile (35) and on both sides in the lower region a second smaller rectangular profile (36)joined over their entire length by means of welding seams (37), and
b) in that the soil treatment tools (5; 70-73) have a clamping foot(40) which, together with a closing piece (41), embraces the lower region of the transverse beam (4) on both sides and with protruding bosses (39)on both sides engages the upper walls (38) of the second profiles (36), the walls (38) being inclined inward with regard to a vertical line by a right angle.

6. Agricultural implement for soil treatment, comprising at least two longitudinal beams (3), at least two transverse beams (4; 34; 50,51) and soil treatment tools (5; 70-73) attached to the latter, wherein the transverse beams (4; 34; 50,51) are profiled bars, comprising in their lower region at least one side portion (54) inclined upwards with regard to a vertical line, extending over their entire length, support members (60,61) of the soil treatment tools (70-73) being attached to the side portion (54), only the upper region of the transverse beams (4; 34) being fastened to the longitudinal beams (3), **caracterized** in that
a) For receiving a row of soil treatment tools (70-73), two hollow transverse beams (50,51) are provided, both having on their sides facing each other a groove (53, a clamping foot (60) fitting with its nose (62)in the groove (52) of one transverse beam (50) and the locking piece (61) fitting with its nose (63) in the groove (53) of the other transverse beam (51), and that
b) the locking *piece* (61) is a two-armed lever whose upper arm (64)engages groove (62)and whose lower arm (65) can be pressed towards the clamping foot (60) by horizontal screw bolts (66).

7. Agricultural implement according to claim 1 or 6 with a plurality of transverse beams (4; 80-82), **caracterized** in that the transverse beams (4; 80-82) have identical cross sections and that various soil treatment tools(5; 70-73) have identical clamping feet (20,21; 40,41; 60,61) so that the different soil treatment tools(5; 70-73) can be fitted in various arrangements at will.

## Revendications

1. Machine agricole pour le traitement du sol comportant au moins deux longerons(3), au moins deux traverses (4;34) et des outils de traitement du sol (5; 70-73) reliés à ceux-ci, les traverses (4;34)étant des profilés, dans **lequel** les traverses (4;34) comportent, dans leur région inférieure, au moins une portion de paroi (14; 38) inclinée en regard d'une verticale d'en bas vers l'intérieur s'étendant sur leur entière longueur, des moyens de fixation (20,21; 40,41) des outils de travail (5; 70-73)étant raccordés à celle-ci, seulement la partie supérieure des traverses (4;34) étant reliée aux longerons (3).

2. Machine agricole selon la revendication 1, les longerons (3) et les traverses étant des profilés creux et fermés, **caractérisé en ce que** les régions supérieures des parois des traverses (4;34) intersectent les longerons, lelong de ce recoupment la r'gion supérieure des traverses est reliée a un longeron (3).

3. Machine agricole selon la revendication 1, **caractérisé en ce que**
a) Chaque traverse présente, dans sa région inférieure des deux cotés en dessus d'une paroi de plancher horizontale (16), une rainure (13) s'étendant sur sa longueur entière, dont la limitation inférieure est constituée par la portion de paroi (14) inclinée en regard d'.une verticale d'en bas vers l'intérieur, et **en ce que**
b) Les outils de traitement du sol (5; 70-73) sont pourvus d'un pied de serrage (20) qui, en coopération avec une piece de fermeture (21), embrasse la région inférieure de sa traverse (4) des deux cotés et dont les bosses (22) faisant saillie engagent les rainures (13).

4. Machine agricole selon la revendication 3, **caractérisé en ce que** le pied de serrage (20)est en contact avec la paroi de sol (16)et engage la rainure (13) avec une bosse (22), la partie inclinée de la rainure (13) étant inclinée d'un angle inférieur à 90 degrés par rapport à une verticale, de préférence de 20 à 45 degrés, vers l'intérieur, et **en ce que** la piece de fermeture (21), engage une rainure (13) à son tour et est reliée au pied de serrage (20) par un boulon vissé (24) qui s'étend horizontalement du cote de la piece de fermeture (21), dans un alésage taraudé du pied de serrage (20).

5. Machine agricole selon la revendication 1, **caractérisé en ce que**
a) La traverse (34) est composée d'un premier profilé rectangulaire (35) et, dans sa région inférieure, d'un second profilé rectangulaire (36) des deux cotés, qui sont reliés sur leur longueur entière par soudage, et
b) Les outils de traitement du sol (5; 70-73) sont pourvus d'un pied de serrage (40) qui, en coopération avec une piece de fermeture (41), embrasse la région inférieure de sa traverse (4) des deux cotés et avec ses bosses (39) faisant saillie des deux cotés engage les parois supérieures (13) inclinées vers l'intérieur par un angle de 90 degrés des seconds profilés (36).

6. Machine agricole pour le traitement du sol comportant au moins deux longerons(3), au moins deux traverses(4;34; 50,51) et des outils de traitement du sol (5; 70-73) reliés à ceux-ci, les traverses (4;34; 50,51)étant des profilés, les traverses (4;34) comportant, dans leur région inférieure, au moins une portion de paroi (14; 38) inclinée en regard d'une verticale d'en bas vers l'intérieur s'étendant sur leur entière longueur, des moyens de fixation (60,61) des outils de travail (5; 70-73)étant *fixés* à celle-ci, seulement la partie supérieure des traverses (4;34) étant reliée aux longerons (3). **caractérisé en ce que**
a) Jaque fois deux traverses creuses (50,51) sont prévues pour recevoir les outils de traitement du sol (70-73)quelles traverses (50,51) ont, sur les cotés faisant face, jaquune une rainure (53), le pied de serrage (60)engageant avec un nez (62)la rainure (53) de l'une des traverses (50)et la piece de fermeture (61) engageant avec un nez (63) la rainure (53) de l'autre traverse (51), et **en ce que**
b) la piece de fermeture (61)est un levier à deux bras dont le bras supérieur (64)engage une rainure(63) et dont le bras inférieur (65) est apte d'ètre serré vers le pied de serrage (60) par moyen de boulons taraudés horizontaux.

7. Machine agricole selon la revendication 1 ou 6 avec une pluralité de traverses (4; 80-82) disposées l'une derrière, l'autre, **caractérisé en ce qu'**ils présentent des sections identiques et **en ce que** des outils de traitement du sol variées (5;70-73)ont des pieds de serrage identiques (20,21; 40,41; 60,61), afin qu'ils puissent etre disposés selon des constellations diverses, au choix.
